# EUROPÄISCHE PATENTSCHRIFT

(11) **EP 0 577 007 B1**
(45) Veröffentlichungstag und Bekanntmachung des Hinweises auf die Patenterteilung: **28.02.1996**
(21) Anmeldenummer: 93110082.0
(22) Anmeldetag: 24.06.1993
(51) Int. Cl.: B60J 5/04

(54) **Fahrzeugtür**
Vehicle door
Porte de voiture

(30) Priorität: 30.06.1992 DE 4221466
(43) Veröffentlichungstag der Anmeldung: 05.01.1994
(73) Patentinhaber: YMOS AKTIENGESELLSCHAFT Industrieprodukte, D-63179 Obertshausen (DE)
(72) Erfinder: Heim, Gunther, Dipl.-Ing., W-6053 Obertshausen 2 (DE); Kroll, Bruno, Dipl.-Ing., W-5608 Radevormwald (DE)
(74) Vertreter: Schieferdecker, Lutz, Dipl.-Ing.

(56) Entgegenhaltungen:
- WO-A-92/12871
- DE-C- 3 520 479
- DE-C- 3 709 489

## Beschreibung

Die Erfindung bezieht sich auf eine insbesondere für Kraftfahrzeuge bestimmte Fahrzeugtür in Rahmen- oder Schalenbauweise mit mindestens einer in die Tür integrierten Diagonalstrebe.

Eine derartige Fahrzeugtür mit zwei sich kreuzenden Diagonalstreben ist aus der DE-C-3 520 479 bekannt. Dort weisen die Diagonalstreben ein zur Türaußenwand hin offenes U-Profil mit entgegengesetzt nach außen gewinkelten Anlageflanschen auf, mit denen sie ggf. unter Zwischenfügung eines elastischen Materials mit der Innenseite der Türaußenwand verklebt sind. Die Türaußenwand wölbt sich leicht nach außen vor, so daß auch die Diagonalstreben eine (nicht angesprochene) entsprechende leichte Wölbung aufweisen könnten, falls die Türaußenwandwölbung nicht durch das zwischengefügte elastische Material ausgeglichen ist. Aber selbst im Falle einer Wölbung der Diagonalstreben ist diese nur minimal. Die mit ihren Enden an einen umlaufenden Türrahmen anschließenden Diagonalstreben bewirken zwar eine allgemeine Versteifung der Tür und damit auch eine Erhöhung des seitlichen Aufprallschutzes, aber gerade in dieser Hinsicht bleibt die bekannte Fahrzeugtür noch zu verbessern.

Dementsprechend liegt der Erfindung die Aufgabe zugrunde, die Seitenaufprallfestigkeit und Steifigkeit der Fahrzeugtür zu optimieren.

Diese Aufgabe wird erfindungsgemäß dadurch gelöst, daß die bzw. jede Diagonalstrebe mit ihren Enden in der Nähe von tragenden Knotenpunkten der Fahrzeugzelle angeordnet und derart nach außen gewölbt ist, daß sie sich bei einem Seitenaufprall streckt und dabei Verformungsenergie absorbiert.

Zweckmäßige Ausgestaltungen und Weiterbildungen der Erfindung ergeben sich aus den Unteransprüchen.

Erfindungsgemäß läßt sich bereits mit einer einzigen Diagonalstrebe das Crash-Verhalten der Fahrzeugtür insbesondere im Hinblick auf einen Seitenaufprall wesentlich verbessern. Dafür sind die nach außen gerichtete Vorwölbung der Diagonalstrebe in Verbindung mit der direkten oder nahezu direkten Einleitung von Kräften über die Strebenenden in die Fahrzeugzelle verantwortlich. Bei einem Seitenaufprall dient die Diagonalstrebe nicht nur zur Übertragung von Kräften sondern auch zum Abbau von Kräften, indem sich die Strebe im Sinne einer Längsspreizung bei gleichzeitiger Verringerung ihrer Wölbung streckt, also die Strebenenden auseinanderbewegt werden, was von einer energieabbauende Verformungsarbeit begleitet ist, so daß nur ein überschießender Anteil der Aufprallenergie an den Enden der Diagonalstrebe übertragen wird. Die konvex nach außen gewölbte Diagonalstrebe kann somit höhere Kräfte aufnehmen als eine nicht (oder nur ganz schwach) gewölbte Strebe, die durch eine entsprechende Seitenaufprallkraft im Sinne einer Verkürzung des Abstands zwischen ihren beiden Enden mittig eingedrückt oder durchgedrückt wird.

Die erfindungsgemäß vorgesehene Anordnung der Diagonalstrebenenden in der Nähe von tragenden Knotenpunkten der Fahrzeugzelle dient dazu, die nicht durch Verformungsarbeit in der Diagonalstrebe aufgezehrte Aufprallenergie in die Fahrzeugzelle so einzuleiten, daß sie von dieser möglichst ohne größere Verformungen aufgenommen wird. Dabei ist unter einem tragenden Knotenpunkt der Fahrzeugzelle ein Knotenpunkt zu verstehen, der nicht nur in Fahrzeuglängsrichtung sondern auch quer dazu abgestützt ist. Dies ist überall dort der Fall, wo die Fahrzeugzelle zur Querversteifung dienende Träger oder Verstrebungen aufweist. Im Falle eines Seitenaufpralles ist dann die Fahrzeugtür bzw. der Türrahmen in der Lage, von der Diagonalstrebe aufgenommene Kräfte unmittelbar an die Fahrzeugzelle abzugeben, die entsprechend abstützend wirkt.

In Weiterbildung der Erfindung ist ferner vorgesehen, daß sich die Diagonalstrebe im Falle einer Fahrertür/vorderen Fahrzeugtür vom Bereich des oberen Scharnieres schräg nach unten in Richtung zu dem bodenseitigen Knotenpunkt der B-Säule hin erstreckt. Im Falle einer hinteren Fahrzeugtür erstreckt sich die Diagonalstrebe vorzugsweise von einer Stelle nahe bei dem bodenseitigen Ende der B-Säule zum Türschloß der Fahrzeugtür hin.

Weitere Merkmale der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt, näher beschrieben. Dabei zeigen:
- Fig. 1:: eine schematische sowie perspektivische Darstellung der Fahrzeugzelle eines Fahrzeuges mit vier Türen;
- Fig. 2:: eine schematische sowie perspektivische Darstellung des Türrahmens einer vorderen Fahrzeugtür in größerem Maßstab;
- Fig. 3:: eine schematische Darstellung wie in Fig. 2 mit einer zusätzlich strichpunktiert angedeuteten Türaußenhaut;
- Fig. 4:: eine schematische Darstellung des Türrahmens in Richtung des Pfeils a in Fig. 2;
- Fig. 5:: eine Draufsicht auf die Diagonalstrebe vor einer Belastung;
- Fig. 6:: eine Draufsicht wie in Fig. 5 nach einer Belastung;
- Fig. 7:: eine schematische Darstellung wie in Fig. 3 von einer vorderen Fahrzeugtür in Schalenbauweise;
- Fig. 8:: ein Ansicht wie in Fig. 4 von der Fahrzeugtür gemäß Fig. 7;
- Fig. 9:: eine schematische sowie perspektivische Darstellung der Fahrzeugzelle eines Fahrzeuges mit zwei Fahrzeugtüren sowie mit einer Querverbindung zwischen den B-Säulen in Brüstungshöhe des Fensters.
- Fig. 10:: eine schematische sowie perspektivische Darstellung der Fahrertür für ein Fahrzeug mit einer Fahrzeugzelle gemäß Fig. 9 in größerem Maßstab;
- Fig. 11:: eine schematische sowie perspektivische Darstellung eines Türrahmens mit zwei Diagonalstreben und
- Fig. 12 :: eine Darstellung wie in Fig. 11 von einer Fahrzeugtür in Schalenbauweise mit zwei Diagonalstreben.

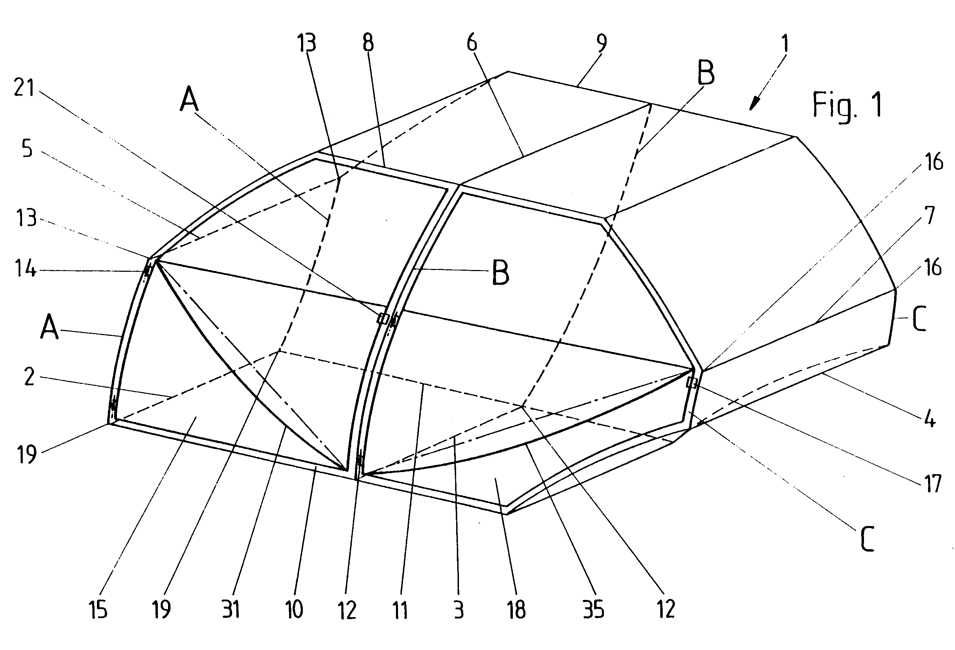

Die Fig. 1 zeigt schematisch eine Fahrzeugzelle 1 eines Kraftfahrzeuges mit vier Fahrzeugtüren. Die Fahrzeugzelle 1 weist A-Säulen, B-Säulen und C-Säulen auf, die untereinnander mit Hilfe von Querstreben 2, 3 und 4 bzw. 5, 6 und 7 verbunden sind. Ferner sind Dach-Längsträger 8 und 9 und Boden-Längsträger 10 und 11 vorgesehen. Die Verbindungsstelle der verschiedenen Säulen A, B und C mit den Querstreben 2 - 7 und den Dach-Längsträgern 8, 9 bzw. den Boden-Längsträgern 10, 11 bilden Knotenpunkte, wobei den Knotenpunkten 12 an den bodenseitigen Enden der B-Säulen, den Knotenpunkten 13 nahe bei den oberen Scharnieren 14 für die vorderen Fahrzeugtüren 15 und den Knotenpunkten 16 nahe bei den Türschlössern 17 der hinteren Fahrzeugtüren 18 besondere Bedeutung zukommt.

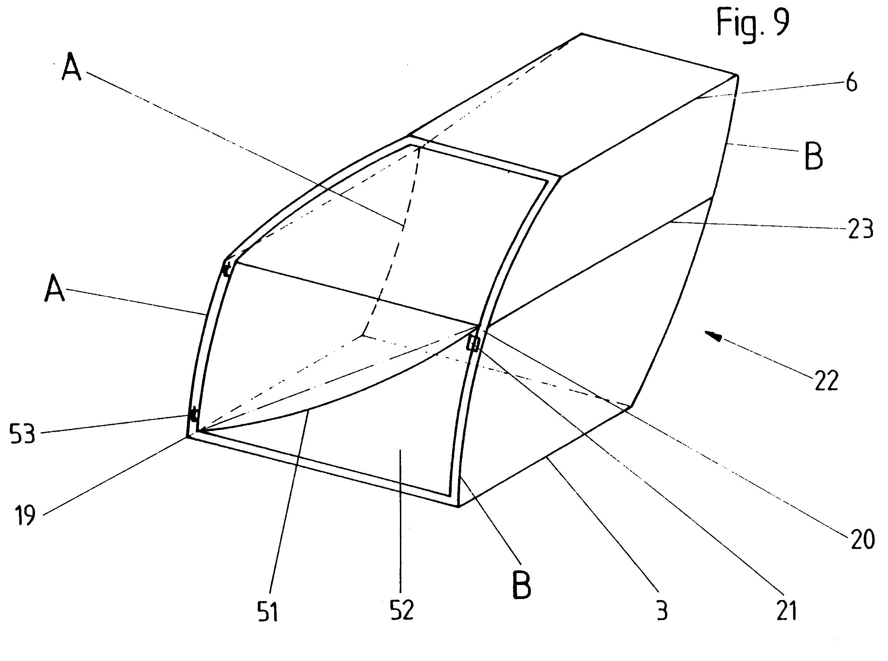

Wichtig für die Gestaltung der vorderen Fahrzeugtüren 15 sind ferner die Knotenpunkte 19 der Fahrzeugzelle 1 am unteren Ende der A-Säulen und mögliche Knotenpunkte 20 in Höhe der Türschlösser 21 im Falle eines Fahrzeuges mit nur zwei Türen gemäß der in Fig. 9 dargestellten Fahrzeugzelle 22, wenn hinter den beiden Sitzen parallel zu den beiden die B-Säulen verbindenden Querstreben 3 und 6 noch eine weitere Querstrebe 23 vorgesehen ist.

Für die verschiedenen Fahrzeugzellen gilt ebenso wie für die verschiedenen Fahrzeugtüren entsprechend den unterschiedlichen Ausführungsbeispielen, daß absolut gleichartige Teile mit denselben Bezugszahlen bezeichnet sind.

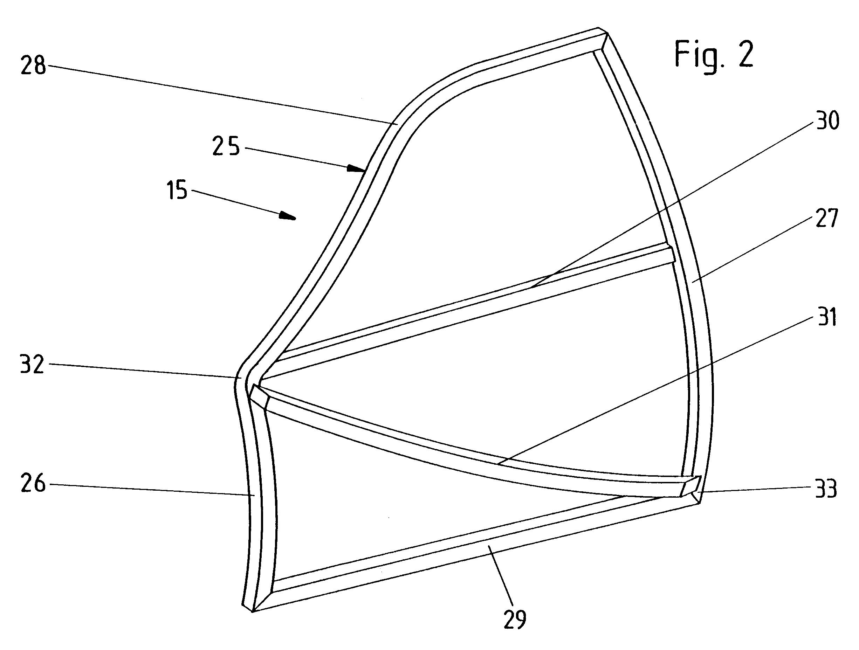

Die Fig. 2 zeigt einen Türrahmen 25 einer vorderen, in Rahmenbauweise zu fertigenden Fahrzeugtür 15 (Fahrertür). Der Türrahmen 25 umfasst ein vorderes Rahmenteil 26, ein hinteres Rahmenteil 27, ein oberes Rahmenteil 28 und ein unteres Rahmenteil 29. Ferner sind ein waagerecht liegendes Rahmenteil 30 als untere Fensterbegrenzung und eine Diagonalstrebe 31 vorgesehen.

Die verschiedenen Rahmenteile 26 - 30 und die Diagonalstrebe 31 sind im Bereich von Türknotenpunkten miteinander verbunden. Die Diagonalstrebe 31 erstreckt sich dabei im wesentlichen von einem Knotenpunkt 32, der das vordere Rahmenteil 26 mit dem oberen Rahmenteil 28 und das waagerecht liegende Rahmenteil 30 verbindet, zu einem Knotenpunkt 33, der die hintere, untere Ecke des Türrahmens 25 im Bereich der Verbindungsstelle des hinteren Rahmenteiles 27 und des unteren Rahmenteiles 29 bildet. Die Diagonalstrebe 31 der vorderen Fahrzeugtür 15 ist somit in Fahrzeuglängsrichtung von vorne und oben nach hinten und unten gerichtet. Ferner befinden sich die Knotenpunkte 32 und 33 des Türrahmens 25 unmittelbar bei oder in der Nähe von den tragenden Knotenpunkten 12 und 13 der Fahrzeugzelle 1. Bei einem Seitenaufprall kann sich daher die Diagonalstrebe 31 mit ihren Enden an Teilen abstützen, die die auftretenden Kräfte sodann unmittelbar in die tragenden Knotenpunkte 12 und 13 der Fahrzeugzelle 1 weiterleiten.

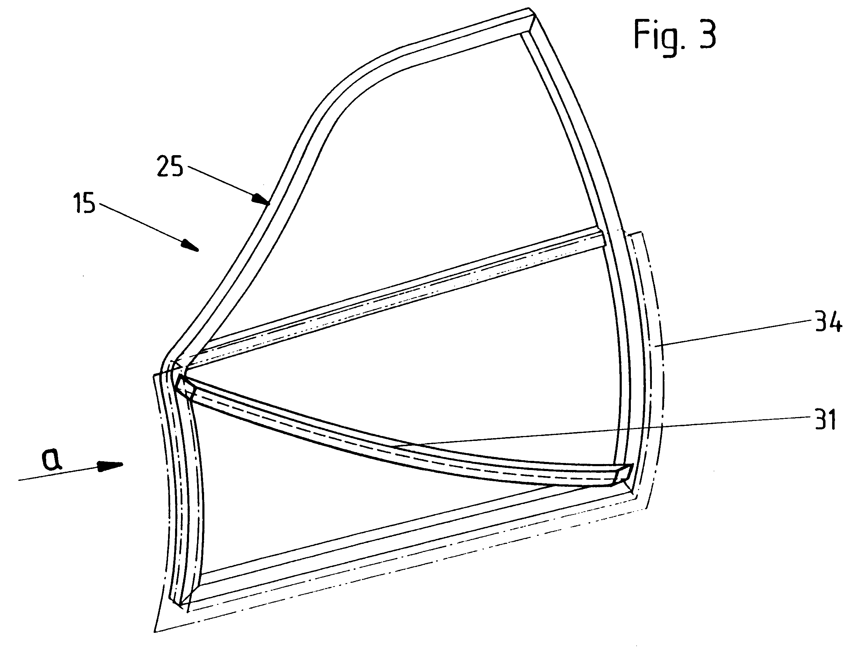

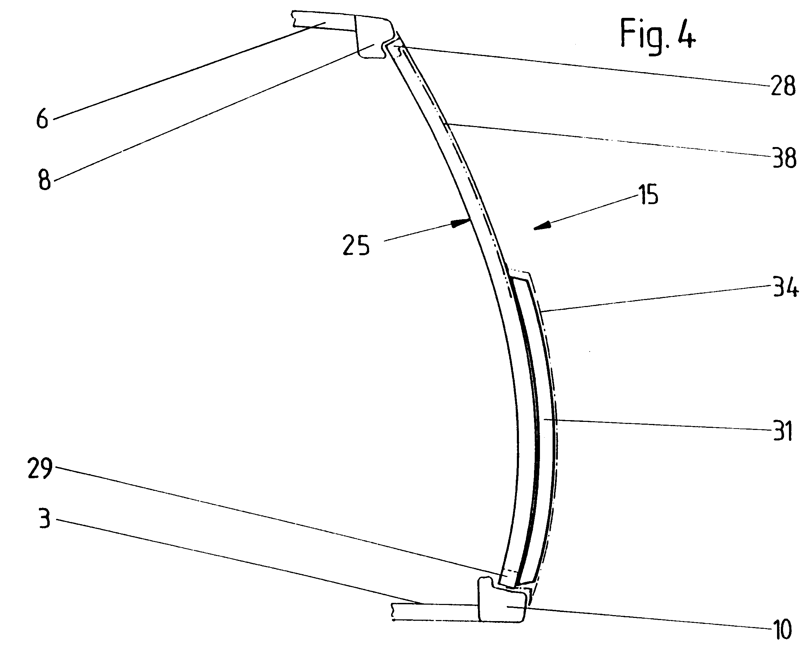

Bei einer fertiggestellten Fahrzeugtür 15 befindet sich die Diagonalstrebe 31 unterhalb einer Türaußenhaut 34, die in den Figuren 3 und 4 gestrichelt bzw. strichpunktiert angedeutet ist.

Ein Vergleich der Figuren 1 und 2 zeigt auch, daß sich die Diagonalstrebe 31 der vorderen Fahrzeugtür 15 vom Bereich des oberen Scharnieres 14 schräg nach unten in Richtung zu dem bodenseitigen Knotenpunkt 12 der B-Säule der Fahrzeugzelle 1 hin erstreckt. Im Falle einer hinteren Fahrzeugtür 18 erstreckt sich eine entsprechende Diagonalstrebe 35 von einer Stelle nahe bei dem bodenseitigen Ende der B-Säule bzw. von dem Knotenpunkt 12 in Richtung Knotenpunkt 16 bzw. Türschloß 17.

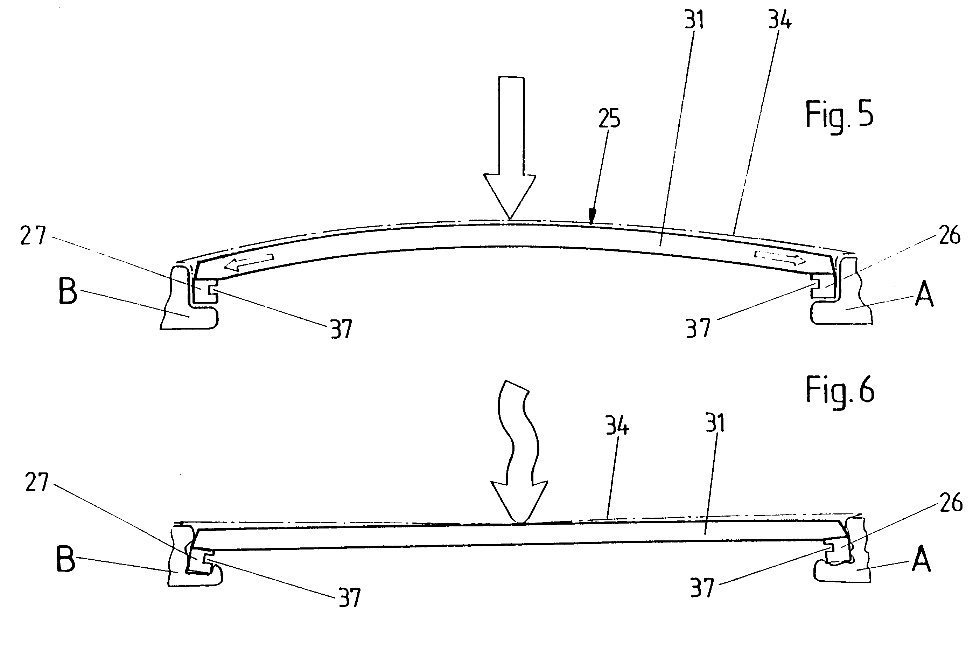

Die beiden Figuren 5 und 6 zeigen die Diagonalstrebe 31 mit den Rahmenteilen 26 und 27 zwischen der A-Säule und der B-Säule. Darüberhinaus zeigen die Fig. 5 und 6 auch die Scheibenführung 37 für das Seitenfenster 38 (Fig. 4). Die Diagonalstrebe 31 befindet sich jeweils außerhalb der Scheibenführung 37, wie auch aus Fig. 4 hervorgeht. In den anderen Figuren ist die Scheibenführung 37 der besseren Übersicht wegen nicht dargestellt.

Vor einem Seitenaufprall weist die Diagonalstrebe 31 die in Fig. 5 dargestellte, nach außen gewölbte Form auf. Der Türrahmen 25 liegt dabei ferner mit etwas Spiel zwischen der A-Säule und der B-Säule. Bei einem Seitenaufprall verformt sich die Diagonalstrebe 31, verliert dabei ihre ursprüngliche Wölbung und streckt sich, wobei sie durch Verformung Energie abbaut. Aufgrund der Lage ihrer Enden leitet die Diagonalstrebe 31 beim Strecken Kräfte sowohl in die A-Säule als auch in die B-Säule und in den Boden des Fahrzeuges ein, da sich die Diagonalstrebe 31 mit ihren Enden sowohl in Richtung der Hauptkraftkomponente als auch rechtwinklig dazu abstützt, nachdem das ursprünglich vorhandene Spiel zwischen den Enden der Diagonalstrebe 31 und der A-Säule bzw. der B-Säule verlorengegangen ist (Fig. 6).

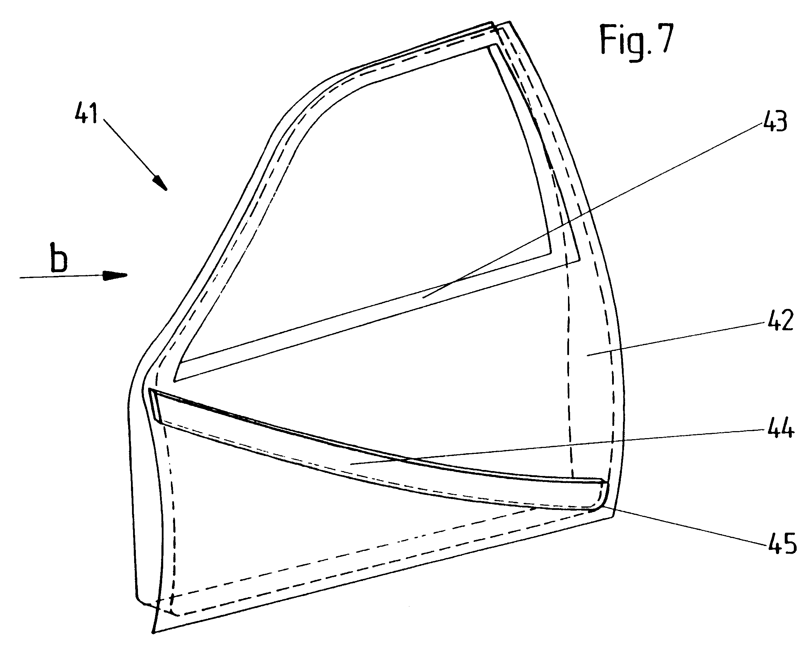

Fig. 7 zeigt eine Fahrzeugtür 41 in Schalenbauweise mit einem Außenteil 42 und einem Innenteil 43, zwischen denen eine Diagonalstrebe 44 wie bei der in Rahmenkonstruktion konzipierten Fahrzeugtür 15 angeordnet ist. Die Diagonalstrebe 44 erstreckt sich wiederum im Falle einer vorderen Fahrzeugtür 41 vom Bereich des oberen Scharniers 14 (Fig. 1) schräg nach unten in Richtung zu dem bodenseitigen Knotenpunkt 12 der B-Säule bzw. zur unteren, hinteren Ecke 45 der Fahrzeugtür 41.

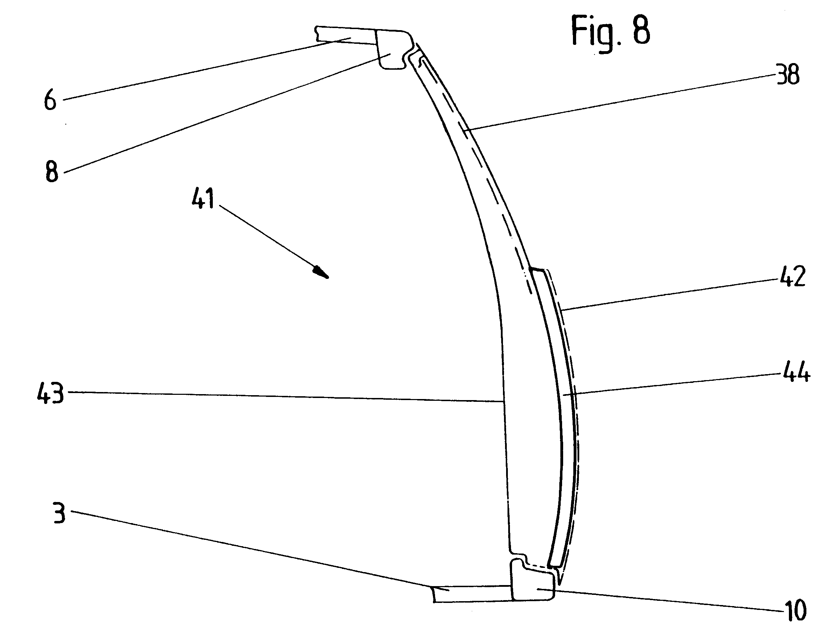

Die Fig. 8 zeigt ähnlich wie Fig. 4 eine schematisch Ansicht der Fahrzeugtür 41 in Richtung des Pfeiles b in Fig. 7. Auch hier ist deutlich, daß die Diagonalstrebe 44 außerhalb der Scheibenführung für das Seitenfenster 38 sowie zwischen dem Außenteil 42 und dem Innenteil 43 liegt.

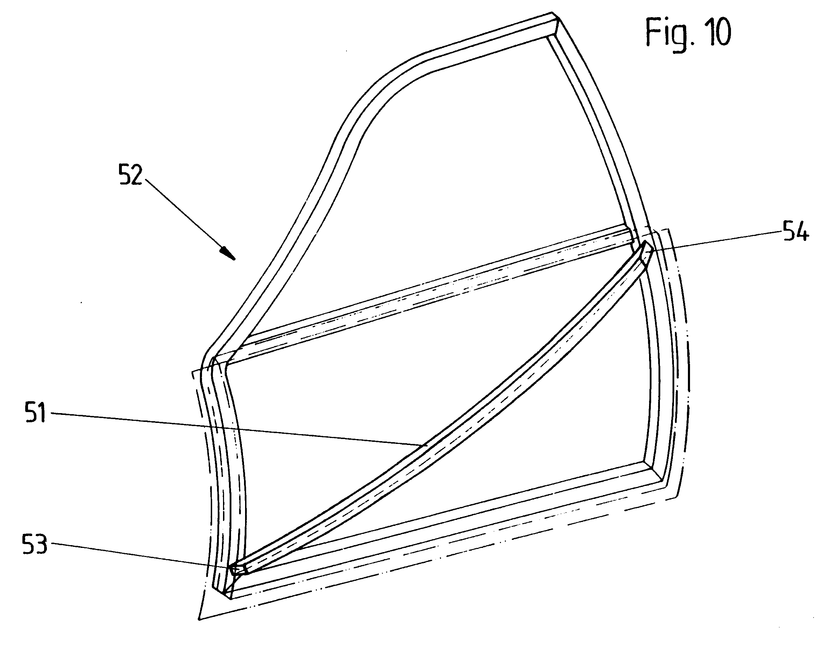

Fig. 9 betrifft die bereits oben erwähnte Fahrzeugzelle 22 mit Querstrebe 23 eines zweitürigen bzw. zweisitzigen oder dreisitzigen Fahrzeuges z.B. mit Mittelmotor. Hier kann die Diagonalstrebe 51 in Fahrzeuglängsrichtung gesehen auch von vorne unten schräg nach hinten und oben verlaufen, wobei sie sich im wesentlichen von dem unteren Scharnier 53 an der A-Säule zu dem Türschloß 21 im Bereich der B-Säule er- streckt. Mit ihren Enden 53 und 54 (Fig. 10) befindet sich die Diagonalstrebe 51 dann im wesentlichen bei den Knotenpunkten 19 und 20 der Fahrzeugzelle 22 und kann von ihr aufgenommene Kräfte nahezu unmittelbar in die Knotenpunkte 19 und 20 einleiten.

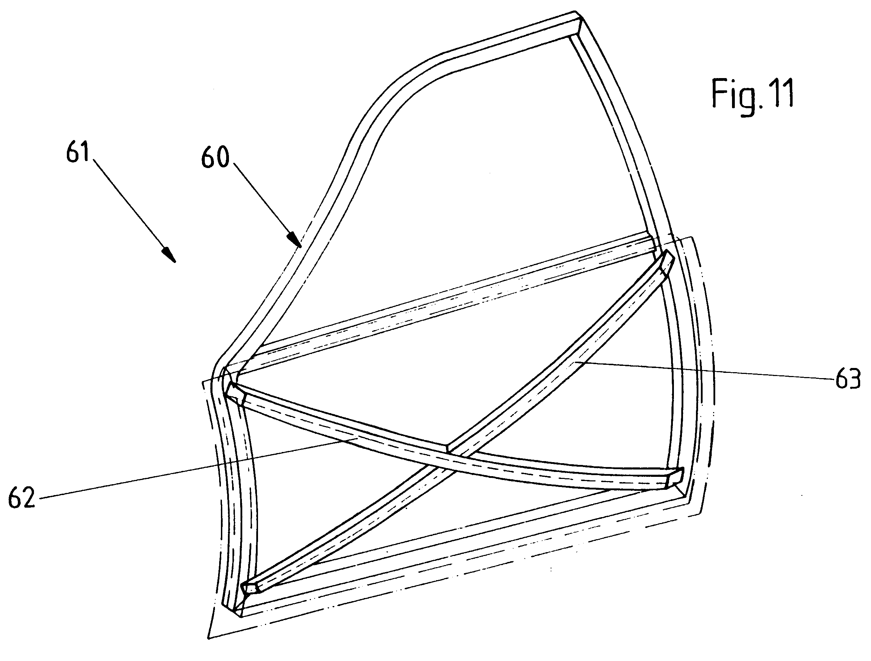

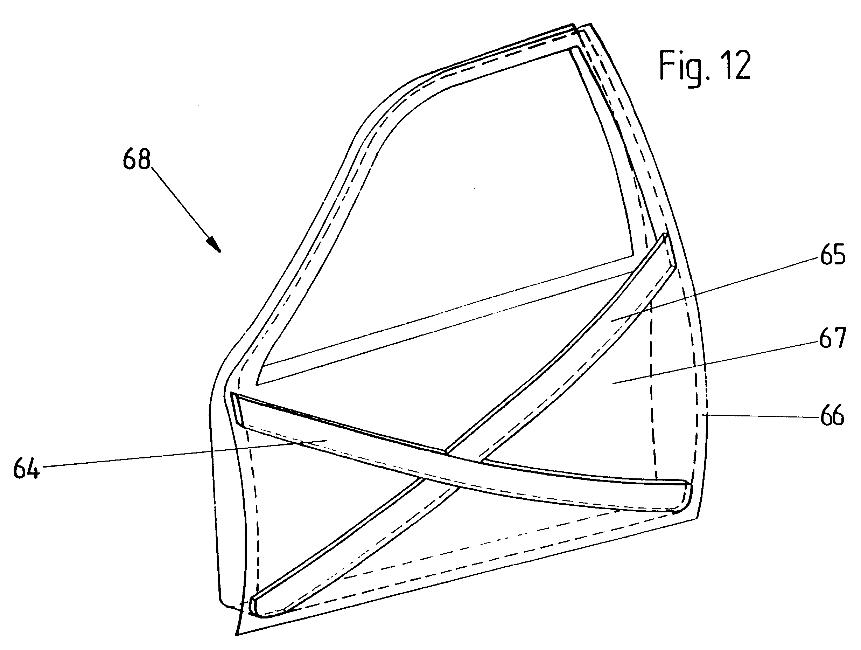

Die Diagonalstrebe kann bei einem zweitürigen Fahrzeug grundsätzlich aber auch in Fahrzeuglängsrichtung von vorne oben nach hinten unten verlaufen, wie dies in Fig. 2 dargestellt ist. Ferner kann der Türrahmen 60 einer Fahrzeugtür 61 sich kreuzende Diagonalstreben 62 und 63 aufweisen (Fig. 11).Oder sich kreuzende Diagonalstreben 64 und 65 sind zwischen dem Außenteil 66 und dem Innenteil 67 einer Schalentür 68 gemäß Fig. 12 angeordnet. Die Verwendung von sich kreuzenden Diagonalstreben 62 - 65 erhöht nochmals die Steifigkeit und Festigkeit der Fahrzeugtüren.

Auch gilt für alle Ausführungsbeispiele der Erfindung, daß die Diagonalstreben jeweils nach außen gewölbt sind und daß ihre Enden in der Fahrzeugtür so angeordnet sind, daß sie mit ihren Enden möglichst in Höhe von tragenden Knotenpunkten der Fahrzeugzelle liegen.

Für die hinteren Fahrzeugtüren gilt grundsätzlich dasselbe, wie für die vorderen Fahrzeugtüren. Die Erfindung ist daher nicht auf die in den Figuren dargestellten Ausführungsbeispiele beschränkt. Vielmehr sind die Grundgedanken auch auf weitere Türen anwendbar, wie sie in den Ansprüchen definiert sind.

## Patentansprüche

1. Fahrzeugtür in Rahmen- oder Schalenbauweise mit mindestens einer in die Tür (15, 41, 52) integrierten Diagonalstrebe (31, 35, 44, 51, 62 bis 65), **dadurch gekennzeichnet**, daß die bzw. jede Diagonalstrebe (31, 35, 44, 51, 62 bis 65) mit ihren Enden (53, 54) in der Nähe von tragenden Knotenpunkten (12, 13, 16, 19, 20) der Fahrzeugzelle (1, 22) angeordnet und derart nach außen gewölbt ist, daß sie sich bei einem Seitenaufprall streckt und dabei Verformungsenergie absorbiert.

2. Fahrzeugtür nach Anspruch 1 in Rahmenbauweise mit Rahmenteilen (26 bis 30), die in Türknotenpunkten (32, 33) miteinander verbunden sind, **dadurch gekennzeichnet**, daß die Enden (53, 54) der bzw. jeder Diagonalstrebe (31, 35, 51, 62 bis 65) im Bereich von Türknotenpunkten (32, 33) angeordnet sind.

3. Fahrzeugtür nach Anspruch 1 oder 2, **dadurch gekennzeichnet**, daß die bzw. jede Diagonalstrebe (31, 35, 44, 51, 62 bis 65) außerhalb der Scheibenführung (37) angeordnet ist.

4. Fahrzeugtür nach einem der Ansprüche 1 bis 3 als vordere Fahrzeugtür (15, 41), **dadurch gekennzeichnet**, daß sich die Diagonalstrebe (31, 44) vom Bereich des oberen Scharnieres (14) schräg nach unten zum bodenseitigen tragenden Knotenpunkt (12) der B-Säule der Fahrzeugzelle (1) erstreckt.

5. Fahrzeugtür nach einem der Ansprüche 1 bis 3 als hintere Fahrzeugtür (18), **dadurch gekennzeichnet**, daß sich die Diagonalstrebe (35) vom Bereich des bodenseitigen tragenden Knotenpunkts (12) der B-Säule der Fahrzeugzelle (1) schräg nach oben zum Bereich des Türschlosses (17) erstreckt.

6. Fahrzeugtür nach einem der Ansprüche 1 bis 3 als Fahrzeugtür (52) für ein zweitüriges Fahrzeug, **dadurch gekennzeichnet**, daß sich die Diagonalstrebe (51) vom Bereich des unteren Scharnieres (53) schräg nach oben zum mittleren tragenden Knotenpunkt (20) der B-Säule der Fahrzeugzelle (22) und in den Bereich des Türschlosses (21) erstreckt.

7. Fahrzeugtür nach einem der Ansprüche 1 bis 6, **dadurch gekennzeichnet**, daß zwei sich kreuzende Diagonalstreben (62 und 63, 64 und 65) vorgesehen sind.

## Claims

1. A vehicle door of a frame or stressed-skin structure having at least one diagonal bar (31, 35, 44, 51, 62 to 65) which is integrated into the door (15, 41, 52), characterised in that the or each diagonal bar (31, 35, 44, 51, 62 to 65) is arranged with its ends (53, 54) in the vicinity of load-bearing node points (12, 13, 16, 19, 20) of the vehicle cell (1, 22) and is curved outwardly in such a way that in the event of a side impact it stretches and in so doing absorbs deformation energy.

2. A vehicle door according to claim 1 of a frame structure with frame members (26 to 30) which are connected together at door node points (32, 33), characterised in that the ends (53, 54) of the or each diagonal bar (31, 35, 51, 62 to 65) are arranged in the region of door node points (32, 33).

3. A vehicle door according to claim 1 or claim 2 characterised in that the or each diagonal bar (31, 35, 44, 51, 62 to 65) is arranged outside the window guide (37).

4. A vehicle door according to one of claims 1 to 3 as a front vehicle door (15, 41) characterised in that the diagonal bar (31, 44) extends from the region of the top hinge (14) inclinedly downwardly to the load-bearing node point (12) which is towards the floor of the B-pillar of the vehicle cell (1).

5. A vehicle door according to one of claims 1 to 3 as a rear vehicle door (18) characterised in that the diagonal bar (35) extends from the region of the load-bearing node point (12) which is towards the floor of the B-pillar of the vehicle cell (1) inclinedly upwardly to the region of the door lock (17).

6. A vehicle door according to one of claims 1 to 3 as a vehicle door (52) for a two-door vehicle characterised in that the diagonal bar (51) extends fro the region of the lower hinge (53) inclinedly upwardly to the central load-bearing node point (20) of the B-pillar of the vehicle cell (22) and into the region of the door lock (21).

7. A vehicle door according to one of claims 1 to 6 characterised in that there are provided two mutually crossing diagonal bars (62 and 63, 64 and 65).

## Revendications

1. Portière de véhicule automobile, à construction monocoque ou à châssis, et comprenant au moins une entretoise diagonale (31, 35, 44, 51, 62 à 65) intégrée à la portière (15, 41, 52), caractérisée en ce que les respectivement chaque entretoise diagonale (31, 35, 44, 51, 62 à 65) est disposée, par ses extrémités (53, 54), à proximité de points de jonction porteurs (12, 13, 16, 19, 20) de l'habitacle (1, 22) du véhicule et est bombée vers l'extérieur de sorte qu'elle s'étire sous un choc latéral et absorbe ainsi l'énergie par déformation.

2. Portière de véhicule automobile en cadre selon la revendication 1, comprenant des parties de cadre (26 à 30) qui sont reliées entre elles par des points de jonction (32, 33) de la portière, caractérisée en ce que les extrémités (53, 54) des respectivement de chaque entretoise diagonale (31, 35, 51, 62 à 65) sont disposées dans la zone des points de jonction (32, 33) de la porte.

3. Portière de véhicule automobile selon la revendication 1 ou 2, caractérisée en ce que les respectivement chaque entretoise diagonale (31, 35, 44, 51, 62 à 65) est disposée à l'extérieur du guide-vitre (37).

4. Portière de véhicule automobile selon l'une des revendications 1 a 3, en tant que portière avant de véhicule (15, 41), caractérisée en ce que l'entretoise diagonale (31, 44) s'étend de la zone de la charnière supérieure (14) en s'inclinant vers le bas en direction du point de jonction porteur (12), côté plancher, du montant B de l'habitacle (1) du véhicule.

5. Portière de véhicule automobile selon l'une des revendications 1 à 3, en tant que portière arrière de véhicule (18) caractérisée en ce que l'entretoise diagonale (35) s'étend depuis la zone du point de jonction porteur (12), côté plancher, du montant B de l'habitacle (1) du véhicule, en s'inclinant vers le bas en direction de la serrure (17) de la portière.

6. Portière de véhicule automobile selon l'une des revendications 1 à 3, en tant que portière (52) pour un véhicule à deux portes, caractérisée en ce que l'entretoise diagonale (51) s'étend depuis la zone de la charnière inférieure (53) en s'inclinant vers le haut en direction du point médian de jonction porteur (20) du montant B de l'habitacle (22) du véhicule et dans la zone de la serrure de portière (21).

7. Portière de véhicule automobile selon l'une des revendications 1 à 6, caractérisée en ce qu'il est prévu deux entretoises diagonales croisées (62 et 63, 64 et 65).
